(19) Europäisches Patentamt
European Patent Office
Office européen des brevets

(11) **EP 2 114 657 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
***B29C 47/10*** *(2006.01)*     ***B29C 47/88*** *(2006.01)*
***C08K 5/10*** *(2006.01)*

(21) Anmeldenummer: **08707575.0**

(22) Anmeldetag: **06.02.2008**

(86) Internationale Anmeldenummer:
**PCT/EP2008/000909**

(87) Internationale Veröffentlichungsnummer:
**WO 2008/095690 (14.08.2008 Gazette 2008/33)**

(54) **PINNINGADDITIV-ZUSAMMENSETZUNG, VERFAHREN ZUR EINBRINGUNG EINES PINNINGADDITIVS IN EINE POLYESTERZUSAMMENSETZUNG SOWIE VERFAHREN ZUR HERSTELLUNG VON POLYESTER**

PINNING ADDITIVE COMPOSITION, METHOD FOR INTRODUCING A PINNING ADDITIVE INTO A POLYESTER COMPOSITION, AND METHOD FOR THE PRODUCTION OF POLYESTER

COMPOSITION ADDITIF DE FIXATION, PROCÉDÉ POUR INTRODUIRE UN ADDITIF DE FIXATION DANS UNE COMPOSITION POLYESTER, AINSI QUE PROCÉDÉ POUR LA PRODUCTION DE POLYESTER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.02.2007 DE 102007005918**

(43) Veröffentlichungstag der Anmeldung:
**11.11.2009 Patentblatt 2009/46**

(73) Patentinhaber: **Lurgi Zimmer GmbH
60295 Frankfurt am Main (DE)**

(72) Erfinder:
• **OTTO, Brigitta
14715 Milow (DE)**
• **KRIESCHE, Gerald
63322 Rödermark (DE)**
• **SEIDEL, Eckhard
60389 Frankfurt (DE)**

(74) Vertreter: **Grünecker, Kinkeldey, Stockmair & Schwanhäusser
Anwaltssozietät
Leopoldstrasse 4
80802 München (DE)**

(56) Entgegenhaltungen:
**EP-A- 0 213 123    EP-A- 0 707 940**

• **DATABASE WPI Week 200303 Derwent Publications Ltd., London, GB; AN 2003-036317 XP002478676 & KR 2002 051 354 A (HYOSUNG CORP) 29. Juni 2002 (2002-06-29)**

**Beschreibung**

Gebiet der Erfindung

Aromatische Polyester, wie beispielsweise Polyethylenterephthalat (PET) sind weithin bekannte Kunststoffe, die u.a. zur Herstellung von Verpackungen, wie Flaschen und Folien, Faserstoffen, wie Technisch-Gam usw. eingesetzt werden können. Die wirtschaftliche Bedeutung dieser Kunststoffe erfordert eine möglichst kostengünstige Verfahrensführung zu deren Herstellung. Zur Erhöhung der Herstellgeschwindigkeit von Folien aus Polyester wird häufig ein Verfahren eingesetzt, bei dem die Polyesterschmelze elektrostatisch aufgeladen wird. Hierbei ist es erforderlich, dass die Polyesterschmelze einen möglichst geringen spezifischen Widerstand aufweist, um eine hohe Produktqualität zu erzielen. Dies wird vielfach durch Zugabe von Metallsalzen zur Polyesterschmelze erreicht.

Diese Metallsalze können beispielsweise in den Polyesterherstellungsprozess eingespeist werden, so dass diese bereits im Polyester enthalten sind. Allerdings kann ein derartiges Polyestermaterial nicht mehr zu allen Produkten verarbeitet werden, da insbesondere hochwertige Faseranwendungen die Anwesenheit von Additiven, wie derartigen Metallsalzen, nicht erlauben.

Daher muss für die Herstellung von Filmen und Folien aus Polyester, um eine große Variabilität der ursprünglichen Polyestermaterialien beizubehalten, ein Verfahren entwickelt werden, bei dem die notwendigen Additive erst nach dem Herstellungsverfahren des Polyesters der Schmelze zugesetzt werden.

Derartige Schmelzeadditivierungsverfahren sind bereits im Stand der Technik bekannt. So beschreibt die EP 1213123 A1 ein Verfahren zur Herstellung von Polyesterzusammensetzungen, bei dem ein Metallsalz als Pinningadditiv der Polyesterschmelze zudosiert wird. Das Metallsalz wird dabei dem Polyestermaterial direkt am Anfang der Schmelzverarbeitung zugefügt, wobei nach Aussage dieser Entgegenhaltung eine Verarbeitung in einem Doppelschneckenextruder notwendig ist.

Die EP 0826478 A2 offenbart ein Verfahren zur Herstellung einer Polyesterzusammensetzung. Auch hierbei können Metallsalze von aliphatischen Carboxylsäuren der Polyesterschmelze zugegeben werden, um den elektrischen Widerstand des Materials einzustellen. Die EP 0707940 A2 offenbart einen elektrostatischen Pinningapparat, der dazu eingesetzt wird, um die Adhesion einer Polymerbahn an einer Walzenoberfläche durch elektrostatische Aufladung zu verbessern. Die US 2005/0288420 offenbart Füllstoff partikel in einem makrocyclischem Oligomer. Die US 2006/0003887 betrifft Polymer aus makrocyclischem Oligomeren, die Tonverbindungen als Füllstoff enthalten.

Ausgehend von dem vorstehend genannten Stand der Technik ist es die Aufgabe der vorliegenden Erfindung ein verbessertes Verfahren zur Einbringung eines Pinningadditivs in ein Polyestermaterial anzugeben, so dass insbesondere Filme und Folien ausgezeichneter Qualität in sehr hoher Geschwindigkeit produziert werden können.

Kurze Beschreibung der vorliegenden Erfindung

Diese Aufgabe wird durch das Verfahren gemäß Anspruch 1 gelöst. Bevorzugte Ausführungsformen sind in den Ansprüchen 2 bis 5 angegeben, sowie in der nachfolgenden Beschreibung. Weiterhin stellt die vorliegende Erfindung ein Verfahren zur Herstellung von Filmen und Folien aus Polyestermaterial zur Verfügung, wie in Anspruch 6 definiert. Bevorzugte Ausführungsformen sind in den Ansprüchen 7 und 8 sowie der nachfolgenden Beschreibung angegeben. Schließlich stellt die vorliegende Erfindung noch ein Additiv gemäß Anspruch 9 zur Verfügung. Bevorzugte Ausführungsformen sind in Anspruch 10 sowie der nachfolgenden Beschreibung angegeben.

Detaillierte Beschreibung der Erfindung

Die vorliegende Erfindung stellt ein Verfahren zur Einbringung eines Pinningadditives in ein Polyestermaterial zur Verfügung, das dadurch gekennzeichnet ist, dass das Pinningadditiv in einer Mischung mit einem cyclischen Butylenterephthalat (CBT) vorliegt. Sowohl das CBT als auch das Pinningadditiv sind Feststoffe, die durch konventionelle Verfahren gut miteinender gemischt werden können. Diese Mischung kann zunächst aufgeschmolzen werden, vor der Einmischung in eine Polyesterschmelze. Alternativ ist es möglich die Mischung direkt in eine Polyesterschmelze zu geben, wobei die Mischung dann in der Polyesterschmelze aufschmilzt.

Weiterhin stellt die vorliegende Erfindung, wie vorstehend ausgeführt, ein Verfahren zur Herstellung eines Films bzw. einer Folie aus einem Polyester zur Verfügung, das dadurch gekennzeichnet ist, dass zunächst Polyestermaterial aufgeschmolzen wird, gefolgt von einer Zudosierung eines Pinningadditives in Form einer aufgeschmolzenen Mischung in einem cyclischen Butylenterephthalat, worauf die somit erhaltene Mischung aus Polyestermaterial und Pinningadditiv anschließend einer konventionellen Folienherstellung zugeführt wird.

Schließlich stellt die vorliegende Erfindung eine Pinningadditiv-Zusammensetzung zur Verfügung, umfassend ein Pinningadditiv und cyclisches Butylenterephthalat.

Die vorliegende Erfindung wird nunmehr zunächst im Hinblick auf das Pinningadditiv und die Pinningadditiv-Zusammensetzung beschrieben. Die diesbezüglichen bevorzugten Ausführungsformen gelten auch für die erfindungsgemäßen Verfahren, wie nachfolgend ausgeführt.

Der Ausdruck Pinning, so wie er in der vorliegenden Anmeldung verwendet wird, beschreibt im Kontext der vorliegenden Erfindung den Einsatz von Stoffen zur Erhöhung der elektrischen Leitfähigkeit bzw. zur Senkung des spezifischen Wiederstands. Bevorzugte Verbindungen die einen Pinning-Effekt in Übereinstimmung mit der vorliegenden Erfindung zeigen, sind unten angegeben. Der Ausdruck Pinningadditiv, so wie er hier verwendet wird, definiert Substanzen, die zur Erhöhung der elektrischen Leitfähigkeit bzw. zur Senkung des spezifischen Widerstands dienen.

Das Pinningadditiv, das in Übereinstimmung mit der vorliegenden Erfindung verwendet wird, ist ein Metallsalz einer aliphatischen Carbonsäure, wobei die aliphatische Carbonsäure von 2 bis 30 Kohlenstoffatomen umfasst. Die erfindungsgemäß einzusetzenden aliphatischen Carbonsäuren (in der Form der Metallsalze) umfassen sowohl Monocarbonsäuren als auch Dicarbonsäuren und illustrative Beispiele davon sind Essigsäure, und längerkettige Säuren, wie Palmitinsäure, Stearinsäure, Ölsäure, Sebancinsäure usw.. Bevorzugt sind insbesondere kürzerkettige Carbonsäuren, insbesondere Essigsäure.

Geeignete Metallsalze sind insbesondere Lithiumsalze, Natriumsalze, Kaliumsalze, Mangansalze Zinksalze, Calciumsalze, Magnesiumsalze und Aluminiumsalze, wobei insbesondere Magnesiumsalze bevorzugt sind. Ein besonders bevorzugtes Pinningadditiv in Übereinstimmung mit der vorliegenden Erfindung ist Magnesiumacetat, welches typischerweise in der Form von Magnesiumacetat-4-Hydrat verwendet wird.

Das Pinningadditiv wird in Übereinstimmung mit der vorliegenden Erfindung in Mischung mit einem cyclischen Butylenterephthalat eingesetzt. Ein cyclisches Butylenterephthalat in Übereinstimmung mit der vorliegenden Erfindung ist ein cyclisches Molekül oder eine Mischung aus cyclischen Molekülen, umfassend alternierende Einheiten, abgeleitet von Terephthalsäure und Butandiol. Das cyclische Butylenterephthalat, verwendet in Übereinstimmung mit der vorliegenden Erfindung, kann somit also auch als cyclisches Oligomer des Butylenterephthalats verstanden werden, wobei erfindungsgemäß bevorzugt Mischungen von cyclischen Dimeren, Trimeren und höheren Oligomeren mit 4 bis 7, vorzugsweise 4 bis 5 Butylenterephthalat-Einheiten Verwendung finden. Das cyclische Butylenterephthalat, zu verwenden in Übereinstimmung mit der vorliegenden Erfindung, weist typischerweise einen Schmelzpunkt, definiert als Maximum der DSC-Kurve von 120 bis 190° C auf, vorzugsweise 125 bis 150°C, insbesondere 135 bis 150° C. Ein derartiges cyclisches Polybutylenterephthalat ist unter der Marke CBT ® von der Firma Cyclics Corporation erhältlich.

Das Pinningadditiv wird in Übereinstimmung mit der vorliegenden Erfindung mit dem cyclischen Butylenterephthalat in einem Verhältnis (Gewichtsverhältnis) von 100 : 10-100 : 0,1 (cyclisches Butylenterephthalat / Pinningadditiv) verwendet, vorzugsweise beträgt das Mischungsverhältnis 100 : 5-100 : 0,5, insbesondere 100 : 1, insbesondere im Hinblick auf die Verwendung von Magnesiumacetat-4-Hydrat als Pinningadditiv. Maßgeblich ist im Hinblick auf die endgültige Verwendung für die Herstellung von Polyestermaterialien zur Folienherstellung jedoch die gewünschte Additivierung des Polyestermaterials, um so eine geeignete Verfahrensführung zur Folienherstellung zu ermöglichen.

Die Pinningadditiv-Zusammensetzung kann weiterhin ein Antiblocking-Additiv umfassen, bevorzugt ist in diesem Zusammenhang $SiO_2$. Derartige Additive können der Pinningadditiv-Zusammensetzung in einer Menge zugegeben werden, so dass ein Verhältnis (Gewichtsverhältnis) von CBT / Antiblockig-Additiv von 2:1 bis 10:1 resultiert, bevorzugt ist ein Verhältnis von 3:1 bis 7:1. Typischerweise wird ein Antiblocking-Additiv so eingesetzt, dass in der Polyesterzusammensezung ein Gehalt an Antiblocking-Additiv, bevorzugt $SiO_2$, von 100 bis 5000 ppm resultiert, bevorzugt 150 bis 4000 ppm.

Weitere geeignete Antiblocking-Additive sind Kaolin (Aluminiumsilikat) und Calciumcarbonat, ebenso wie weitere, vorzugsweise anorganische Substanzen, wie Talk, Woll-lastonit usw.

Derartige Antiblocking-Additive beeinflussen wesentlich die Oberflächenrauhigkeit von Filmen bei der Herstellung und haben so Einfluss auf die Handhabbarkeit. Eine Erhöhung der Oberflächenrauheit erleichtert insbesondere das Abrollen eines hergestellten Films oder einer hergestellten Folie von einer entsprechenden Rolle, d. h. der Film, die Folie klebt nicht zusammen.

Diese Pinningadditiv-Zusammensetzung kann im Hinblick auf eine Zudosierung zu einer Polyesterschmelze geeigneter Weise zunächst aufgeschmolzen werden, vorteilhafter Weise erfolgt die Aufschmelzung in einem Ringextruder, da so eine sehr schnelle Homogenisierung erreicht werden kann. Die aufgeschmolzene Pinningadditiv-Zusammensetzung kann dann für den Fachmann in üblicher Weise dem Polyestermaterial zudosiert werden, so dass eine Polyesterzusammensetzung mit Pinningadditiv erhalten wird. Alternativ kann, wie bereits vorstehend ausgeführt, auch die feste Mischung in nicht aufgeschmolzenem Zustand der Polyesterschmelze zugegeben werden, so dass erst in der Polyesterschmelze ein schmelzen der Mischung aus CBT und Pinningaditiv erfolgt. Diese Polyesterzusammensetzung ist dann zur Herstellung von Polyesterfilmen und Polyesterfolie geeignet, wobei durch die erfindungsgemäße Einbringung des Pinningadditivs Polyesterfilme und Polyesterfolien mit ausgezeichneten Qualitätsmerkmalen erhalten werden können.

Auch das Polyestermaterial kann bevorzugt in einem Ringextruder aufgeschmolzen werden, da so ein schnelles Aufschmelzen und eine gute Vermischung mit dem Pinningadditiv gesichert werden kann. Die Dosierzone, d.h. der Punkt der Einspeisung der Pinningadditiv-Zusammensetzung, weist bevorzugt eine Temperatur von mehr als 230°C auf, besonders bevorzugt mehr als 250°C, wie beispielsweise 260°C.

Der Ausdruck "Polyester", "Polyestermaterial, "Polyesterzusammensetzung" usw., verwendet in der vorliegenden Anmeldung, benennt in Übereinstimmung mit der vorliegenden Erfindung irgendeine Polyesterart, insbesondere aromatische Polyester und hier insbesondere Polyester abgeleitet von Terephthalsäure und Ethylenglycol, also Polyethylenterephtahalat. Andere erfindungsgemäß geeignete Polyester sind Polytrimethylenterephthalat, Polybutylenterephthalt und Polyethylennaphthalat, wobei erfindungsgemäß Polyethylenterephthalat und Polytrimethylenterephthalat bevorzugt sind. Weiterhin können auch Copolymere verwendet werden, also insbesondere Copolymere, erhältlich durch den Einsatz von 2 oder mehr Dicarbonsäuren und/oder 2 oder mehr Diolkomponenten. Weiterhin können Copolymere verwendet werden, die zusätzliche Dicarbonsäuren umfassen, wie Hydroxydicarbonsäuren, ebenso wie Verzweigungsmittel, wie Säuren mit 3 oder mehr funktionellen Gruppen und/oder Alkohole mit 3 oder mehr Hydroxylgruppen.

Das Polyestermaterial weist im allgemeinen eine Grenzviskosität im Bereich von 0,5 bis 1,3, vorzugsweise 0,56 bis 0,70 dUg auf, gemessen in Phenol/Dichlorbenzol (6:4) bei 25° C (125 mg Polyester auf 25 ml Lösung). Derartige Polyestermaterialien sind zur Herstellung von Filmen und Folien gut geeignet.

Die Polyesterzusammensetzungen erhalten in Übereinstimung mit der vorliegenden Erfindung können auf bekannten Anlagen großtechnisch und kostengünstig zu Folien verarbeitet werden wobei u.a. auch hohe Technisch-Gam Qualitäten hergestellt werden können.

Darüber hinaus können die Filme und Folien in großem Maßstab mit einer besonders geringen Fehlerquote, gemessen an der hohen Herstellungsgeschwindigkeit, produziert werden.

Durch die Zugabe der erfindungsgemäßen Pinningaddidv-Zusammensetzung kann die elektrische Leitfähigkeit von Polyestern, insbesondere aromatischen Polyestern wie PET sicher auf einen Bereich angehoben werden, der es ermöglicht sehr hohe Produktionsgeschwindigkeiten zu fahren, bei gleichzeitiger sicherer und reproduzierbarer Herstellung von dünnen Folien. Bei der Herstellung von PET-Filmen beispielsweise kann durch den Einsatz der erfindungsgemäßen Pinningaddidv-Zusammensetzung die Geschwindigkeit der ersten Walze (Gießrolle/Chill Roll) ohne Probleme erheblich erhöht werden, im Vergleich mit der Verarbeitung von PET ohne Zusatz der erfindungsgemäßen Pinningaddidv-Zusammensetzung, beispielsweise auf Werte von bis zu 120 m/Min., ohne dass dabei Probleme entstehen. Weiterhin können mit derartig hohen Geschwindigkeiten auch sicher dünnere Filme, beispielsweise im Bereich von bis zu 12 $\mu$m Dicke erzeugt werden. Die erfindungsgemäße Pinningaddidv-Zusammensetzung ermöglicht insbesondere die sichere Einstellung der gewünschten elektrischen Leitfähigkeit bzw. des Widerstands auf Werte von beispielsweise weniger als 5 x $10^7$ Ohm x cm für PET. Derartige Werte können durch den Einsatz der erfindungsgemäßen Pinningaddidv-Zusammensetzung sicher erreicht werden.

Darüber hinaus zeigen die erfindungsgemäß erhaltenen Folien eine geringe elektrostatische Aufladung, die für viele Anwendungszwecke vorteilhaft oder notwendig ist.

Die erfindungsgemäß erhaltenen Folien zeichnen sich durch eine geringe Trübung aus. Darüber hinaus können die erfindungsgemäß erhaltenen Polyesterzusammensetzungen ohne eine hohe Fehlerquote zu besonders dünnen Folien verarbeitet werden.

Des Weiteren zeigen die erfindungsgemäß erhaltenen Folien einen geringen Anteil an Verunreinigungen und können einfach recycelt werden.

Darüber hinaus weisen die erfindungsgemäß erhaltenen Polyesterzusammensetzungen und die hieraus erhältlichen Folien keinen Anteil an gesundheitlich bedenklichen Stoffen auf.

Die erfindungsgemäß erhaltene Polyesterzusammensetzung kann übliche Mengen, vorzugsweise 0 bis 5 Gew.-%, vorzugsweise 0 bis 1 Gew.-%, jeweils bezogen auf das Gesamtgewicht der Mischung weitere Zusatzstoffe als Beimischungen, wie Katalysatoren, Stabilisatoren, Antistatika, Antioxidantien, Flammschutzmittel, Farbstoffe, Farbstoffaufnahme-Modifikatoren, Lichtstabilisatoren, organische Phosphite, optische Aufheller, Füllstoffe und Mattierungsmittel, insbesondere Siliziumoxide, Aluminiumoxide und Tonerden, enthalten.

Die Herstellung der Polyesterzusammensetzung kann durch jedes bekannte Verfahren erfolgen. Die Herstellung des Polyesters kann kontinuierlich oder diskontinuierlich durch Umsetzung eines Diols mit einem Diester, wie beispielsweise Dimethylterephthalat, oder mit Terephthalsäure erfolgen. Bevorzugt wird hierbei die Säure, beispielsweise Terephthalsäure, eingesetzt. Zunächst entsteht hierbei der Dicarbonsäurediester, der bei ansteigenden Temperaturen unter Verminderung des Druckes ein- oder mehrstufig polykondensiert wird, wobei Diol und Wasser freigesetzt werden.

Im Allgemeinen werden für diese Umsetzung Katalysatoren eingesetzt, wie beispielsweise Verbindungen des Ti, Mn, Mg, Ca, Li, Co, und/oder Zn für die Umesterung; beispielsweise Verbindungen des Sb, Ti, Ge und/oder Sn für die Veresterung und beispielsweise Verbindungen des Sb, Ti, Pb, Ge, Zn und/oder Sn oder Zeolithe für die Polykondensation. Hierbei werden die Katalysatoren in üblichen Mengen, beispielsweise bis zu 500 ppm, bezogen auf den Polyester eingesetzt.

Weitere Einzelheiten zur Herstellung der Polyesterzusammensetzung sind unter anderem in Encyclopedia of Polymer Science and Engineering Bd. 12, 2. Auflage, Seiten 195-210, EP 0 921 145, US 4,113,704 und DE-OS 198 41 375 dargelegt.

Der auf das Metall bezogene Anteil an Alkali- und/oder Erdalkalimetallen in der Polyesterzusammensetzung, bezogen auf das Gewicht der Zusammensetzung, liegt vorzugsweise im Bereich von 1 bis 100 ppm, besonders bevorzugt 5 bis 20 ppm.

Der atomare Anteil an Phosphor der Polyesterzusammensetzung, bezogen auf das Gewicht der Zusammensetzung, liegt vorzugsweise im Bereich von 5 bis 500 ppm, besonders bevorzugt 10 bis 250 ppm.

Vorzugsweise weist die erfindungsgemäß erhaltene Polyesterzusammensetzung einen Trübungsgrad in "nephelometrischen Trübungseinheiten" (NTU) kleiner oder gleich 12, insbesondere kleiner oder gleich 8, auf.

Darüber hinaus weist eine erfindungsgemäß erhaltene Polyestezusammensetzung einen geringen spezifischen Widerstand auf. Vorzugsweise beträgt dieser Widerstand höchstens $10^8$ Ohm x cm, insbesondere höchstens 5 x $10^7$ Ohm x cm, wobei der spezifische Widerstand über die Messung der Schmelzeleitfähigkeit in einer Edelstahlzelle mit angeschlossenem Meßgerät bestimmt wurde.

Die erfindungsgemäß erhaltenen Polyesterzusammensetzungen weisen vorzugsweise einen geringen Anteil an Verunreinigungen, insbesondere an Acetaldehyd auf. Der Anteil an Acetaldehyd beträgt vorzugsweise höchstens 100 ppm, besonders bevorzugt höchstens 60 ppm, bezogen auf das Gewicht der Zusammensetzung.

Die Polyesterzusammensetzung kann zu Granulaten verarbeitet werden. Des Weiteren kann die aus dem Herstellungsverfahren erhaltene Polyesterschmelze unmittelbar, beispielsweise zu Folien, verarbeitet werden.

Die Herstellung von Filmen bzw. Folien aus der Polyesterzusammensetzung ist ebenfalls bekannt, wobei in diesem Zusammenhang unter anderem auf die Druckschrift Encyclopedia of Polymer Science and Engineering Bd. 12, 2. Auflage, Seiten 195-210 und US 2,823,421 verwiesen wird.

Zur Herstellung von Filmen bzw. Folien aus den Polyesterzusammensetzungen werden vorzugsweise Verfahren eingesetzt, bei denen der Polyester elektrostatisch aufgeladen wird, um die Haftung des Polyesters auf der Kühlwalze zu erhöhen. Derartige Verfahren sind seit längerem bekannt. Bevorzugte Varianten werden u.a. in EP- 0 707 940 sowie in der zuvor dargelegten Veröffentlichung "Improved Electrostatic Pinning Using a Biased, Conductive Shield", Journal of Electrostatics 40&41 (1997) 735-740, beschrieben.

Üblich wird die Polyesterzusammensetzung in geschmolzenem Zustand durch eine Düse auf eine Walze extrudiert, die im Allgemeinen eine Temperatur im Bereich von 60°C bis 80°C aufweisen kann. Vielfach entsteht hierbei ein Film aus amorphem Polyester. Falls eine Polyethylenterephthalat umfassende Schmelze verarbeitet wird, liegt die Temperatur der Polyesterschmelze im Allgemeinen im Bereich von 270 bis 310 °C.

Der Kristallinitätsgrad des Films unmittelbar nach Verlassen der ersten Walze, d.h. vor dem Strecken der Folie, ist im Allgemeinen kleiner als 5%, vorzugsweise kleiner oder gleich 1 % und besonders kleiner oder gleich 0,5%.

Die Dicke des Films, der durch Überführen der Polyesterschmelze auf eine Walze erhalten wird, kann in einem weiten Bereich liegen, wobei dieser Wert von der beabsichtigten Anwendung der Folie sowie den Verstreckungsfaktoren in longitudinaler und transversaler Richtung abhängig ist. Im Allgemeinen liegt die Dicke des Films im Bereich von 3 bis 500 µm, vorzugsweise 6 bis 300 µm.

Die Geschwindigkeit der Walze, auf die die Polyesterschmelze überführt wird, kann üblich im Bereich von 80 bis 140 m/min, vorzugsweise 90 bis 120 m/min liegen.

Anschließend kann der erhaltene Film in longitudinaler Richtung, d.h., in Maschinenlaufrichtung gestreckt werden. Im Allgemeinen wird der Film bei einer Temperatur von 75 bis 100°C, vorzugsweise 85 bis 90°C longitudinal gestreckt.

Der Faktor, um den der Film gestreckt wird, liegt vorzugsweise im Bereich von 2 bis 6, besonders bevorzugt 3 bis 5, abhängig von einer Einfach- oder Mehrfachverstreckung.

Vorzugsweise wird der Film, der durch Überführen der Polyesterschmelze auf eine Walze erhalten wurde, mit einer Geschwindigkeit im Bereich von 200 bis 600 m/min, besonders bevorzugt 270 m/min bis 400 m/min longitudinal gestreckt.

Nach diesem Schritt weist der Film vorzugsweise einen Kristallinitätsgrad im Bereich von 10 bis 25%, insbesondere 15 bis 20% auf.

Der so erhaltene Film kann beispielsweise zur Herstellung von Bändern für Verpackungen dienen.

Des Weiteren kann der nach der longitudinalen Streckung erhaltene Film in einem weiteren Schritt transversal, d.h. quer zur Maschinenlaufrichtung, gestreckt werden.

Vorzugsweise liegt der Faktor, um den der Film transversal gestreckt wird, im Bereich von 2 bis 5, besonders bevorzugt 3 bis 4. Im Allgemeinen wird der Film bei einer Temperatur von 90 bis 120°C, vorzugsweise 100 bis 120°C transversal gestreckt.

Nach dem Strecken in transversaler Richtung weist der Film vorzugsweise eine Kristallinität im Bereich von 20 bis 45%, insbesondere 30 bis 40% auf.

Der so erhaltene Film kann unter anderem als Verpackungsmaterial, insbesondere als Schrumpffolie eingesetzt werden.

Des Weiteren kann der Film auch einem Wärmestabilisierungsschritt unterzogen werden, sodass die Folie bei Erwärmen auf Temperaturen auf 150°C oder auf 190°C nur einen geringen Schrumpf zeigt. Hierzu wird der transversal gestreckte Film für einige Sekunden auf Temperaturen im Bereich von 180°C bis 220°C erwärmt. Dadurch steigt die Kristallinität auf etwa 50 % an.

Die durch das Verfahren der vorliegenden Erfindung erhältlichen Filme können auf sämtlichen Gebieten eingesetzt werden, in denen auch herkömmliche Folien eingesetzt werden. So können aus den Folien Filme für Verpackungen, beispielsweise im Lebensmittelbereich und auf dem medizinischen Sektor, und Filme für die Fotografie und für die Datensicherung, beispielsweise Mikrofilme, Magnetbänder, Folien für Druckanwendungen, beispielsweise hot-stamping Folien hergestellt werden.

Die Dicke der durch das vorliegende Verfahren erhältlichen Filme liegt im Allgemeinen im Bereich von 1 µm bis 350 µm, wobei dieser Wert von der Anwendung abhängig ist. So beträgt beispielsweise die Dicke von Folien zur Herstellung von Verpackungen 6 bis 250 µm, für Filme 50 µm bis 175 µm, für technische Filme und Mikrofilme 100 bis 200 µm, für die Isolierung von Motoren und Generatoren 250 bis 350 µm, wohingegen die Dicke von Folien zur Herstellung von Kondensatoren im Bereich von 1 bis 5 µm liegt.

Die erfindungsgemäß erhaltenen Filme bzw. Folien weisen vorzugsweise eine geringe Fehlerquote bei geringer Foliendicke auf. Bevorzugte Folien weisen höchstens 1100, insbesondere höchstens 900 und besonders bevorzugt höchstens 600 Fehler größer 50 µm pro m$^2$ auf, wobei diese Werte auch bei dünnen Folien erzielt werden, die vorzugsweise eine Dicke von höchstens 250 µm, besonders bevorzugt höchstens 30 µm aufweisen.

Die Erfindung wird nachfolgend durch Beispiele und Vergleichsbeispiele veranschaulicht, ohne dass hierdurch eine Beschränkung erfolgen soll.

### Herstellung von Additivzusätzen

#### 1.1. Herstellen von Mg-Acet-4-Hydrat- PET Pulvermischungen

PET wird nach Kühlung mit flüssigem Stickstoff kryogemahlen und mit dem Mg-Acet-4-Hydrat im Verhältnis von 100: 1 in einem geeigneten Mischer, z.B. Röhnradmischer homogeniesiert.

#### 1.2. Herstellen von Mg-Acet-4-Hydrat- CBT Mischungen

Handelsübliche CBT Pellets der Firma Cyclics werden mit Mg-Acet-4-Hydrat im Verhältnis von 100: 1 in einem Mischer, z.B. Röhnradmischer homogenisiert.

### Analytik

Die Eigenschaften der erhaltenen Polyesterzusammensetzungen wurden nach den folgenden Verfahren analysiert, wobei die erhaltenen Daten sowie die Polykondensationsdauer in Tabelle 1 dargelegt sind.

Die intrinsische Viskosität (I.V) wurde bei 25 °C an einer Lösung von 500 mg Polyester in 100 ml eines Gemisches aus Phenol und 1,2-Dichlorbenzol (3 : 2 Gew.-Teile) gemessen.

Die COOH-Endgruppenkonzentration wurde mittels photometrischer Titration mit 0,05 n ethanolischer Kalilauge gegen Bromthymolblau einer Lösung eines Polyesters in einem Gemisch aus o-Kresol und Chloroform (70: 30 Gew.-Teile) bestimmt.

Die Messung der Farbwerte L und b erfolgte nach HUNTER, wobei

$$L = 10 \cdot \sqrt{Y}$$

und

$$b = \frac{7,0}{\sqrt{Y}} \cdot (Y - 0,8467 \cdot Z).$$

Die Polyesterchips wurden zunächst im Trockenschrank bei 135 ± 5 °C während einer Stunde kristallisiert. Die Farbwerte wurden danach ermittelt, indem in einem Dreibereichsfarbmessgerät der Farbton der Polyesterprobe mit drei Fotozellen, denen je ein Rot-, Grün- und Blaufilter vorgeschaltet war, gemessen wurde (X-, Y- und Z-Werte). Die Auswertung erfolgte nach der Formel von Hunter.

Die Messung des Trübungsgrades in "nephelometrischen Trübungseinheiten" (NTU) erfolgte an einer 10 Gew.-%igen Lösung von Polyester in Phenol/1,2 Dichlorbenzol (3 : 2 Gew.-Teile) mit einem Nephelometer der Fa. Hach (Typ XR, nach US-Patent 4 198 161) in einer Küvette mit 22,2 mm Durchmesser in Analogie zu der für Wasser gebräuchlichen Norm DIN 38404, Teil 2. Gemessen wird die Intensität des Streulichtes im Vergleich zu einer Formazin-Standardlösung abzüglich des Wertes vom Lösungsmittel (ca. 0,3 NTU).

Der Filtertest wurde folgendermaßen durchgeführt:

Über einen Laborextruder mit druckabhängiger Schneckengeschwindigkeitskontrolle werden 2-3 kg vorgetrocknetes Polyestermaterial bei Temperaturen von 290 °C über einen Filter mit einer nominellen Maschenweite von 15 $\mu$m durchgesetzt und der Druckanstieg am Filter über eine Zeit von 60 min. bewertet.

Der Filterwert Fw wird über folgende Formel berechnet:

$$Fw = A \times (Pe - Pb) / M \quad [bar \times cm^2/kg]$$

Pe - Druck am Testende in bar
Pb - Druck zu Testbeginn in bar
M - Durchgesetzte Polymermenge in Kg
A - Filterfläche in cm$^2$

Bestimmung der optischen Fehler in der Folie:

Das Polymer wird in einem Laborextruder aufgeschmolzen. Über eine Flachdüse wird ein Dickfilm erzeugt, der mit Hilfe einer temperierten Kühlwalze zu einer Folie ausgebildet wird. Diese wird durch ein optisches Inspektionssystem gezogen, in dem die Folienfehler mittels eines speziellen digitalen Hochgeschwindigkeitszeilensensors mit Bildverarbeitungsrechner (Fa. Optical Control Systems GmbH, OCS) ermittelt werden. Zur Auswertung der gemessenen Fehler werden die Impulse bestimmten Größen- und Formklassen zugeordnet. Es erfolgt die Angabe der mittleren Anzahl der sichtbaren Fehler > 50 $\mu$m/m$^2$.

Der spezifische elektrische Widerstand des Polyesters wird mit einer speziell dafür entwickelten Edelstahlzelle mit Elektroden und einem angeschlossenen Meßgerät mit digitaler Meßwertanzerge ermittelt. Dazu wird die Polymerprobe in Schritten von 10 K/min auf 270 °C aufgeheizt und nach einer Beharrungszeit von 10 min in Schritten von 10 K/min bis auf 300 °C aufgeheizt, die Leitfähigkeit in $\mu$S/min gemessen und mit der individuellen Zellkonstante auf den spezifischen elektrischen Widerstand in $\Omega \cdot cm^{-1}$ umgerechnet.

Der Acetaldehydgehalt wurde bestimmt durch Erhitzen einer Polyesterprobe in einem geschlossenen Gefäß, wobei die Menge an Acetaldehyd im Gasraum des Gefäßes gaschromatographisch durch Head-Space Chromatographie bestimmt wurde, Injektionssystem HS40, Perkin Eimer, Trägergas Stickstoff, Säule 1,5 m Edelstahl, Füllung Poropack Q, 80 -100 mesh, Probemenge 2g, Heiztemperatur 150 °C, Heizdauer 90 min.

**Beispiel 1 (nicht erfindungsgemäß)**

PET mit einer intrinsischen Viskosität (IV) von 0,635 dl/g wurde unter flüssigem Stickstoff gemahlen und mit handelsüblichen Mg-Acetat-4-Hydrat (Merck) im Masseverhältnis 100 :1 in einem kommerziellen Laborrührgerät gemischt (Additivansatz 1.1). Das PET-Pulver-Mg-Salzgemisch wurde dann in einen Ringextruder (Typ RE 3 der Fa. Extricom) zu einer PET Schmelze mit einer IV von 0,63 dl/g über ein Seitendosieraggregat eingespeist, wobei die Dosierzone des Extruders eine Temperatur von 270 °C aufwies. Der Ringextruder bestand aus 12 Wellen (**Durchmesser/Länge entspr. Prospekt**) mit 3 Entgasungszonen mit angeschlossener Granulation zur Erzeugung von PET Granulat.

Die Mg-Konzentration im PET betrug 8 ppm.

Die Verarbeitung in den weiteren beschriebenen Beispielen 2-5 erfolgte analog dem Beispiel 1.

**Beispiel 2 (erfindungsgemäß)**

Beispiel 2 wurde gemäß Beispiel 1 durchgeführt, nur dass anstelle des Additivansatzes 1.1 der Additivansatz 1.2 (CBT-Pulver-Mg-Salz) eingesetzt wurde. CBT lässt sich problemlos in einer handelsüblichen Kugelmühle pulverisieren und mit gemahlenem PET - Granulat homogenisieren.

**Beispiel 3 (nicht erfindungsgemäß)**

Beispiel 3 wurde gemäß Beispiel 1 durchgeführt, nur dass zu der Mischung zusätzlich Silica (SYLYSIA® 350 der Fa. Sylysiamont) zugesetzt wurde. Die Menge an $SiO_2$ im PET betrug 1.500 ppm.

**Beispiel 4 (erfindungsgemäß)**

Beispiel 4 wurde gemäß Beispiel 2 durchgeführt, nur dass zu der Mischung zusätzlich Silica (SYLYSIA® 350 der Fa. Sylysiamont) zugesetzt wurde. Die Menge an $SiO_2$ im PET betrug 1500 ppm.

**Beispiel 5 (nicht erfindungsgemäß)**

Beispiel 5 wurde gemäß Beispiel 4 durchgeführt nur dass anstelle des Silicapulvers eine 15%ige wässrige Silicasuspension verwendet wurde

**Beispiele 6 bis 8**

Die Beispiele 6,7 und 8 wurden gemäß Beispiel 1, 4 und 5 mit einem Doppelschneckenextruder der Fa. Bersdorf konfiguriert gemäß EP 1 213 123 durchgeführt.
Die erhaltenen Daten sind in Tabelle 2 aufgeführt.
Als Ausgangsmaterial wurde Glanz-PET der Fa. Yizheng mit folgenden Daten eingesetzt:

IV: 0,630 dl/g
COOH: 13 mmol/kg
Farbwert L (Chip, kristallisiert): 82
Farbwert b (Chip, kristallisiert): -0,2
Trübung: 3,5
Acetaldehyd: 36 ppm
spezifischer elektrischer Widerstand: $5,5 \cdot 10^{-8}\ \Omega \cdot cm^{-1}$
Fehler > 50 $\mu$m: 820
Filterwert: 2 bar · $cm^2$ /kg

In den nachfolgenden Tabellen werden die Abkürzungen RE für Ringextruder und DS für Doppelschneckenextruder verwendet.

Tabelle 1

| | | Beispiel 1 | Beispiel 2 | Beispiel 3 | Beispiel 4 | Beispiel 5 |
|---|---|---|---|---|---|---|
| **Erfindungsgemäß Additivzusätze** | | nein | ja | nein | ja | nein |
| Mg aus Mg-Acetat | | + | + | + | + | + |
| PET Kryomahlgut | | + | - | + | - | - |
| CBT | | - | + | - | + | + |
| $SiO_2$ | | - | - | + | + | +* |
| Extruder | | RE | RE | RE | RE | RE |

\*) $SiO_2$ Zugabe als 15%ige wässrige Suspension

| **Analysen** | Einheit | | | | | |
|---|---|---|---|---|---|---|
| AA | ppm | 53 | 51 | 65 | 63 | 93 |
| Viskosität | dl/g | 0,615 | 0,630 | 0,601 | 0,627 | 0,58 |
| COOH - Endgruppen | mmol/kg | 13 | 14 | 20 | 16 | 26 |
| L Chips kris. | - | 80,6 | 81,6 | 82,7 | 79,7 | 79,8 |
| b Chips kris. | - | -0,5 | 0,1 | -0,2 | 0,3 | 0,3 |
| Trübung | NTU | 3,5 | 3,2 | 11,2 | 6,9 | 28,9 |
| Filtertest | bar·$cm^2$/ kg | 3,4 | 2,1 | 290 | 13,7 | 456 |
| Fehler > 50 $\mu$m | 1/$m^2$ | 990 | 910 | 1565 | 1090 | 1350 |
| Spezifisscher elektrischer Widerstand | $10^7$ Ω·cm | 7 | 6 | 8 | 6,5 | 16,9 |
| Mg | ppm | 8 | 10 | 8 | 9 | 9 |

(fortgesetzt)

| | | Beispiel 1 | Beispiel 2 | Beispiel 3 | Beispiel 4 | Beispiel 5 |
|---|---|---|---|---|---|---|
| SiO2 | ppm | - | - | 1500 | 1500 | 1500 |

Tabelle 2

| | | Beispiel 6 | Beispiel 7 | Beisspiel 8 |
|---|---|---|---|---|
| **Erfindungsgemäß Additivzusätze** | | nein | nein | nein |
| Mg aus Mg-Acetat | | + | + | + |
| PET Kryomahigut | | + | - | - |
| CBT | | - | + | + |
| $SiO_2$ | | - | +* | +* |
| Extruder | | DS | DS | DS |
| *) $SiO_2$ Zugabe als 15%ige wässrige Suspension | | | | |
| **Analysen** | Einheit | | | |
| AA | ppm | 66 | 73 | 110 |
| Viskosität | dl/g | 0,610 | 0,609 | 0,56 |
| COOH - Endgruppen | mmol/kg | 19 | 23 | 27 |
| L Chips kris. | - | 80,0 | 80,1 | 80,6 |
| b Chips kris. | - | 2,5 | 2,9 | 2,4 |
| Trübung | NTU | 4,5 | 10 | 29 |
| Filtertest | bar·cm$^2$/kg | 30 | 110 | 532 |
| Fehler > 50 $\mu$m | 1/m$^2$ | 1005 | 1190 | 1440 |
| pezifisscher elektrischer Widerstand | 10$^7$ $\Omega$·cm | 9 | 11 | 14 |
| Mg | ppm | 8 | 8 | 10 |
| SiO2 | ppm | - | 1500 | 1500 |

Die erhaltenen Daten zeigen, dass die erfindungsgemäß erhaltenen Polyesterzusammensetzungen einen niedrigen spezifischen elektrischen Widerstand sowie eine geringe Trübung aufweisen. Darüber hinaus ergeben sich Vorteile im Hinblick auf den Filtertest.

Die so hergestellten Polyester wurden in einer Filmanlage mit Doppelschneckenhauptextruder BT-55-33d, Filter BEMATEC 100 $\mu$m, EDI PET Düse, Draht-Pinning (0,12 mm) mit Hilfswickler zu Film verarbeitet. Die Abzugsgeschwindigkeiten wurden von 40 in Zehnerschritten auf 110m/min gesteigert.

Die Materialien aus den Beispielen 2-5 wurden gegenüber dem Material des Beispiels 1 getestet. Dabei war für die erfindungsgemäß additivierten Polyester eine Erhöhung der Abzugsgeschwindigkeit von 25-30 % möglich.

Mit dem Zusatz von CBT wurde gleichzeitig ein verbessertes Fließverhalten der PET-Schmelze in den Beispielen 2 und 4 gegenüber den Beispielen 1 und 3 über den Druckabbau am Ringextruder gemessen, der durch die verbesserte Gleitwirkung verursacht wird und bei max. 15% liegt.

**Patentansprüche**

1.   Verfahren zur Eindosierung von Pinningadditiv zu einem Polyestermaterial, umfassend die Stufe des Aufschmelzens des Polyestermaterials und Vermischen dieser Schmelze mit einer Pinningadditiv-Zusammensetzung, umfassend mindestens ein Pinningadditiv und cyclisches Butylenterephthalat, wobei das Pinningadditiv ein Metallsalz einer aliphatischen Carbonsäure mit 2 bis 30 Kohlenstoffatomen ist.

2.   Verfahren nach Anspruch 1, wobei die Pinningadditiv-Zusammensetzung vor der Einmischung mit der Polyesterschmelze in einem Ringextruder aufgeschmolzen wird.

3.   Verfahren nach Anspruch 1 oder 2, **dadurch gekennzeichnet, dass** das Pinningadditiv Magnesiumacetat ist.

4.   Verfahren nach einem der Ansprüche 1 bis 3, **dadurch gekennzeichnet, dass** das Polyestermaterial ein Polyethylenterephthalat ist.

5. Verfahren nach einem der Ansprüche 1 bis 4, **dadurch gekennzeichnet, dass** die Pinningadditiv-Zusammensetzung weiterhin SiO2 umfasst.

6. Verfahren zur Herstellung einer Polyesterfolie oder eines Polyesterfilms, umfassend die Stufe der Herstellung einer Polyesterschmelze mit einem Pinningadditiv nach einem der Ansprüche 1 bis 5, weiter umfassend die Stufe der Herstellung eines Polyesterfilms oder einer Polyesterfolie aus der Polyesterzusammensetzung.

7. Verfahren nach Anspruch 6, **dadurch gekennzeichnet, dass** der Polyesterfilm oder die Polyesterfolie eine Dicke im Bereich von 1 bis 350 μm aufweist.

8. Verfahren nach einem der Ansprüche 6 oder 7, **dadurch gekennzeichnet, dass** das Verfahren weiterhin eine Stufe der Streckung des erhaltenen Polyesterfilms umfasst.

9. Pinningadditiv-Zusammensetzung, umfassend mindestens ein Pinningadditiv und cyclisches Butylenterephthalat, wobei das Pinningadditiv ein Metallsalz einer aliphatischen Carbonsäure mit 2 bis 30 Kohlenstoffatomen ist.

10. Pinningadditiv-Zusammensetzung nach Anspruch 9, **dadurch gekennzeichnet, dass** das Pinningadditiv Magnesiumacetat ist.


**Claims**

1. Process for feeding pinning additive to a polyester material, encompassing the stage of melting of the polyester material and mixing of the said melt with a pinning additive composition, encompassing at least one pinning additive and cyclic butylene terephthalate, where the pinning additive is a metal salt of an aliphatic carboxylic acid having from 2 to 30 carbon atoms.

2. Process according to Claim 1, where the pinning additive composition is melted in an annular extruder prior to incorporation by mixing with the polyester melt.

3. Process according to Claim 1 or 2, **characterized in that** the pinning additive is magnesium acetate.

4. Process according to any of Claims 1 to 3, **characterized in that** the polyester material is a polyethylene terephthalate.

5. Process according to any of Claims 1 to 4, **characterized in that** the pinning additive composition also encompasses $SiO_2$.

6. Process for the production of a polyester foil or of a polyester film, encompassing the stage of the production of a polyester melt with a pinning additive according to any of Claims 1 to 5, and also encompassing the stage of the production of a polyester film or of a polyester foil from the polyester composition.

7. Process according to Claim 6, **characterized in that** the thickness of the polyester film or the polyester foil is in the range from 1 to 350 μm.

8. Process according to Claim 6 or 7, **characterized in that** the process also encompasses a stage of the stretching of the resultant polyester film.

9. Pinning additive composition, encompassing at least one pinning additive and cyclic butylene terephthalate, where the pinning additive is a metal salt of an aliphatic carboxylic acid having from 2 to 30 carbon atoms.

10. Pinning additive composition according to Claim 9, **characterized in that** the pinning additive is magnesium acetate.

**Revendications**

1. Procédé pour doser un additif de fixation dans une matière de polyester, comprenant l'étape consistant à faire fondre la matière de polyester et mélanger cette masse fondue avec une composition d'additif de fixation, comprenant au moins un additif de fixation et un térephtalate de butylène cyclique, dans lequel l'additif de fixation est un sel métallique d'un acide carboxylique aliphatique contenant de 2 à 30 atomes de carbone.

2. Procédé selon la revendication 1, dans lequel la composition d'additif de fixation est fondue avant le mélange avec la masse fondue de polyester dans une extrudeuse annulaire.

3. Procédé selon la revendication 1 ou 2, **caractérisé en ce que** l'additif de fixation est l'acétate de magnésium.

4. Procédé selon l'une quelconque des revendications 1 à 3, **caractérisé en ce que** la matière de polyester est un poly (térephtalate d'éthylène).

5. Procédé selon l'une quelconque des revendications 1 à 4, **caractérisé en ce que** la composition d'additif de fixation comprend en outre du $SiO_2$.

6. Procédé pour fabriquer une feuille de polyester ou un film de polyester, comprenant l'étape consistant à préparer une masse fondue de polyester avec un additif de fixation selon l'une quelconque des revendications 1 à 5, comprenant en outre l'étape consistant à fabriquer un film de polyester ou une feuille de polyester à partir de la composition de polyester.

7. Procédé selon la revendication 6, **caractérisé en ce que** le film de polyester ou la feuille de polyester présente une épaisseur dans la plage de 1 à 350 $\mu$m.

8. Procédé selon l'une quelconque des revendications 6 à 7, **caractérisé en ce que** le procédé comprend en outre une étape consistant à étirer le film de polyester obtenu.

9. Composition d'additif de fixation, comprenant au moins un additif de fixation et un térephtalate de butylène cyclique, dans laquelle l'additif de fixation est un sel métallique d'un acide carboxylique aliphatique contenant 2 à 30 atomes de carbone.

10. Composition d'additif de fixation selon la revendication 9, **caractérisée en ce que** l'additif de fixation est l'acétate de magnésium.

# EP 2 114 657 B1

## IN DER BESCHREIBUNG AUFGEFÜHRTE DOKUMENTE

**In der Beschreibung aufgeführte Patentdokumente**

- EP 1213123 A1
- EP 0826478 A2
- EP 0707940 A2
- US 20050288420 A
- US 20060003887 A
- EP 0921145 A
- US 4113704 A
- DE OS19841375 A
- US 2823421 A
- EP 0707940 A
- US 4198161 A
- EP 1213123 A

**In der Beschreibung aufgeführte Nicht-Patentliteratur**

- Encyclopedia of Polymer Science and Engineering. vol. 12, 195-210
- Improved Electrostatic Pinning Using a Biased, Conductive Shield. *Journal of Electrostatics,* 1997, vol. 40, 41, 735-740